(19) Europäisches Patentamt

European Patent Office

Office européen des brevets

(11) **EP 0 959 580 A1**

(12) **EUROPEAN PATENT APPLICATION**

(43) Date of publication:
24.11.1999 Bulletin 1999/47

(51) Int. Cl.$^6$: **H04L 1/00**, H04L 25/03

(21) Application number: 98303938.9

(22) Date of filing: 19.05.1998

(84) Designated Contracting States:
**AT BE CH CY DE DK ES FI FR GB GR IE IT LI LU MC NL PT SE**
Designated Extension States:
**AL LT LV MK RO SI**

(71) Applicant:
**LUCENT TECHNOLOGIES INC.**
**Murray Hill, New Jersey 07974-0636 (US)**

(72) Inventor: **Kuczynski, Peter, Dr.**
**90491 Nuremberg (DE)**

(74) Representative:
**Funnell, Samantha Jane et al**
**Lucent Technologies UK Limited,**
**5 Mornington Road**
**Woodford Green, Essex IG8 0TU (GB)**

(54) **Iterative equaliser and decoder**

(57)     The present invention relates generally to the field of mobile communications systems and particularly to an apparatus for iterative equalising and decoding coded data of these systems.

Iterative equalisation and decoding has the basic idea of using a maximum a posteriori (MAP) detector, which is able to accept not only channel values but also a priori information about the symbols to be detected. If existing systems should be upgraded to iterative equalisation and decoding to provide higher reception sensitivity, the structure of these systems has to be changed significantly.

The present invention avoids this problem by using a separate set of equaliser and decoder on a separate hardware for iterative equalising and decoding allowing flexible design of the BTS on higher sensitivity reception demands.

## Description

## TECHNICAL FIELD

The present invention relates generally to the field of mobile communications systems and particularly to an apparatus for iterative equalising and decoding coded data of these systems.

## BACKGROUND OF THE INVENTION

Iterative equalisation and decoding using the so called „turbo-principle" which is used for iterative detection of coded data transmitted over frequency selective channels, e. g. in a mobile communications system, has become known. The turbo-principle has the basic idea of using a maximum a posteriori (MAP) detector, which is able to accept not only channel values but also a priori information about the symbols to be detected.

From the article „Iterative Equalisation and Decoding in Mobile Communications Systems", G. Bauch et al, The Second European Personal Mobil Communications Conference (2. EPMCC'97) together with 3. ITG-Fachtagung „Mobile Kommunikation", pp. 307-312, VDE/ITG, September/October 1997, it is known that the a priori information can be obtained in various ways, e. g. from the feedback of an outer or parallel decoder which is the „turbo component" of the iterative detection scheme for binary symbols ±1 the a priori information is used as a logarithmic likelihood ratio:

$$L(x) = \log \frac{P(x = +1)}{P(x = -1)} \qquad (1)$$

A mobile radio channel with intersymbol interference (ISI) can be regarded as a time varying convolutional code with complex valued coded symbols or bits, given by the propagation conditions, for which a time discrete cannel model could be build. If the coefficients of this time discrete cannel model are known the channel can be decoded by means of maximum a posteriori (MAP) symbol or sequence estimation. To improve the performance soft-in/soft-out decoders are used that accept a priori information about the symbols or bits to be decoded and deliver soft values of the decoded symbols or bits. In iterative equalisation it is also necessary that the channel decoder deducts soft values from the coded symbols or bits. These values are generated in the form of logarithmic likelihood ratios (L-values) as defined above in formula (1).

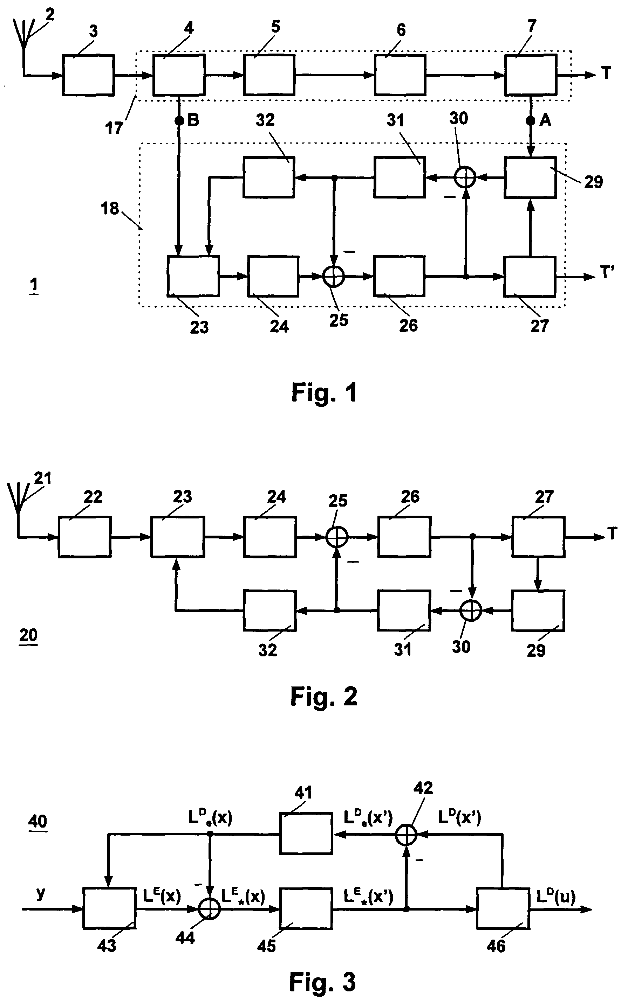

From Fig. 3 the principle of an iterative equaliser and decoder 40 can be seen. From a not shown radio frequency receiver including a receive filter a complex valued sequence y is obtained and coupled to a equaliser 43. The equaliser 43 generates L-values $L^E(x)$

from the coded bits. These L-values $L^E(x)$ are coupled to a deinterleaver 45 which is coupled to a decoder 46 which generates L-values $L^D(u)$ about the information bits and L-values $L^D(x')$ about the coded bits. The L-values at the output consist of an extrinsic and an intrinsic part. The extrinsic part $L^D_e(x')$ is the incremental information about the current bit generated by the decoder from all information available for the other bits. It can be calculated by bitwise subtracting the L-values $L^{E*}(x')$ at the input of the decoder 46 from the corresponding L-values $L^D(x')$ at the output of the decoder 46 with an subtractor 42. The extinsic informtation $L^D_e(x')$ is coupled to a interleaver 41 and fed back to the equaliser 43 where it is used as a priori information in a new decoding attempt - being the first iteration. Using this a priori information the equaliser 43 delivers less erroneous decisions which are again passed to the decoder 46. A few iterations improve normally the bit error rate. It is important to feed back only the extrinsic part $L^D_e(x')$ corresponding to $L^D(x')$ because of the correlation between the a priori information used by the equaliser 43 and previous decisions of the equaliser 43 which has to be minimised.

For the same reason the a priori information $L^D_e(x)$ has to be subtracted with a subtractor 44 from the a posteriori L-values $L^E(x)$ at the output of the equaliser 43, in order to minimise correlation.

If the above explained principle of an iterative equaliser and decoder is, e. g., used in a base transceiver station (BTS) according to the Global System for Mobile communications (GSM), a BTS structure 20 as depicted in Fig. 2 results. The BTS 20 consists of an antenna 21, a radio receiver 22, which may include a receive filter, and a sampling device, an equaliser 23, a decipherer 24, a deinterleaver 26 and a channel decoder 27. These mentioned elements are coupled with one another and represent a commonly known BTS that performs sequential processing of input data. The output T of the decoder 27 is coupled to the TRAU interface (Transcoder and Rate Adaptor Unit) for further processing.

To form an iterative equaliser and decoder, a channel encoder 29, an interleaver 31, a cipherer 32 and two subtractors 25 and 30 are used in addition. The encoder 29 is coupled to the decoder 27 and encodes the input of the decoder 27 to reverse the decoding thereof In contrast to a standard encoder this modified encoder operates on soft information provided by the decoder. The output signal of the encoder 29 is coupled to the subtractor 30 to subtract the input signal of decoder 27 to avoid the above mentioned correlation. The output signal of the subtractor 30 is coupled to the interleaver 31. The output signal of the interleaver 31 is coupled to the cipherer 32 and to the subtractor 25 where it is subtracted from the output signal of the decipherer 24 to form the input signal of the deinterleaver 26. As mentioned above, the subtraction is necessary to avoid correlation. The output signal of the cipherer 32 is coupled to the equaliser 23 to form the iterative loop.

In order to build an iterative equaliser and decoder, the known BTS structure has to be changed significantly, as explained above and can be seen from Fig. 2. Besides the encoder 29, interleaver 31, cipherer 32 and subtractors 25 and 30 mentioned above the elements and the architecture of the commonly known BTS 20 have to be also modified significantly. This is because of the fact that in addition to the actual symbols to be equalised and decoded earlier symbols in addition have to be handled for the iteration of that earlier symbols. This becomes even more relevant for a GSM system as in GSM time division multiple access (TDMA) is used and an iteration has to be performed for the different time slots resulting in a limited processing time for each channel of the TDMA system. Therefore memory and processing speed have to be increased compared to the standard BTS design. For this reason it is a problem to use the turbo-principle for a commonly used BTS design or to provide a BTS which can be upgraded on demand to iterative equalisation and decoding, if a higher reception sensitivity of the BTS is needed.

## SUMMARY OF THE INVENTION

Accordingly, it is an object of the present invention to provide an iterative equaliser and decoder for mobile communications systems. It is the aim of the inventive apparatus under consideration to avoid the drawbacks known from the state of the art.

The object is achieved by providing an apparatus for the detection of coded data, having a sequential part with at least a first equaliser and a first decoder performing a sequential detection of the coded data, an iterative part with at least a second equaliser and a second decoder performing a iterative detection, whereby the sequential part is coupled to the iterative part through an interface, which delivers information about data processed by the first equaliser and the first decoder for iterative detection by the second equaliser and the second decoder.

It is an advantage of the present invention that it flexibly allows to upgrade an existing BTS with iterative equalisation and decoding, if a higher reception sensitivity is needed. It is another advantage of the present invention that it allows to build a BTS which later can be upgraded with iterative equalisation and decoding, without the necessity of providing elements for iterative equalisation and decoding at the time the BTS is set up.

The present invention will become more fully understood from the detailed description given hereinafter and further scope of applicability of the present invention will become apparent. However, it should be understood that the detailed description is given by way of illustration only, since various changes and modifications within the spirit and scope of the invention will become apparent to those skilled in the art.

## BRIEF DESCRIPTION OF THE DRAWINGS

The following detailed description is accompanied by drawings of which

Fig. 1    is a schematic representation of a base transceiver station having an iterative equaliser and decoder according to this invention,

Fig. 2    is a schematic representation of a base transceiver station having an iterative equaliser and decoder, and

Fig. 3    is a schematic representation showing the principal of iterative equalisation and decoding.

## DETAILED DESCRIPTION

Depicted in Fig. 1 is a schematic representation of base transceiver station 1 consisting of a sequential part 17 for detecting coded data and an iterative part 18 for detecting coded data processed by the sequential part 17.

The sequential part 17 of the BTS 1 consists of an equaliser 4, a decipherer 5, a deinterleaver 6 and a channel decoder 7. The mentioned elements of the sequential part 17 are coupled to one another and build a commonly known BTS that performs sequential detection of input coded data. The coded data is input to the sequential part 17 from a radio receiver 3, which has at least one antenna 2 and includes radio frequency processing parts like a receive filter. The output T of the sequential part 17, which is formed by the output of decoder 7, is coupled to the TRAU interface (Transcoder and Rate Adaptor Unit) for further processing.

The iterative part 18 of the BTS 1 consists of an simplified equaliser 23 which operates with pre-processed data form the equaliser 4 from the sequential part. The further parts of the BTS1 are a cipherer 32 and a decipherer 24, an interleaver 31 and a deinterleaver 26, a channel encoder 29 and a channel decoder 27, and two subtractors 25 and 30. The iterative part 18 has two inputs or interfaces A and B coupled to the sequential part 17. The first input A couples the equaliser 4 of the sequential part 17 to the simplified equaliser 23 of the iterative part 18. The second input B couples the channel decoder 7 of the sequential part 17 to the channel encoder 29 of the iterative part 18. The ciphering information for the cipherer and decipherer in the recursuive part may be transmitted over the input B. The iterative part 18 has an output T' which is formed by the output of the channel decoder 27 and is coupled to the TRAU interface. The output T of the sequential part 17 is not used if the iterative part 18 is present.

To form the iterative part 18 all components as explained above with reference to Fig. 2 for a BTS according to the GSM standard, with exception of the radio receiver 22 and a simplified equaliser operating with the pre-processed data 23, are used. The iterative part 18 also is working as explained above with reference to Fig. 2.

The separation into a sequential part 17 and an iterative part 18 for equalising and decoding is possible because when coded data is input first to the equaliser 4 of the sequential part 17 no a priori information is available for the equaliser 4, as these a priori information is processed by the decoder 7 of the sequential part 17 at a later time, i.e., after the coded data has been processed by the equaliser 4 itself the decipherer 5 and the deinterleaver 6 of the sequential part 17.

The logarithmic likelihood ratios processed by the decoder 7 of the sequential part 17, and explained in general above with reference to Fig. 2 and 3, are coupled through interface A to the channel encoder 29 of the iterative part 18. The iterative part 18 processes these information as explained in general above with reference to Fig. 2 and 3. For processing the likelihood ratios the decoder 7 of the sequential part 17 has to be dimensioned properly to provide the necessary additional processing power.

Through interface B the pre-processed data of the equaliser 4 of the sequential part 17 is coupled to the equaliser 23 of the iterative part 18, to set equaliser 23 with the pre-processed coded data as received, to immediately start iterations when the a priory information is available from interface A. If TDMA is used the iteration has to be started for each time slot as explained.

To limit the number of iterations performed by the iterative part 18 the reception quality of the coded data can be measured by the radio receiver 3 and be used as an indicator for the necessary number of iterations. If TDMA is used different indicators for every time slot can be used.

Instead of using the two interfaces A and B only the interface A can be used if the necessary data is put through decipherer 5, deiterleaver 6 and decoder 7 of the sequential part 17. In this case decipherer 5, deiterleaver 6 and decoder 7 of the sequential part 17 have to be dimensioned properly to provide the necessary additional processing power and data transmission capabilities.

## Claims

1. Apparatus for the detection of coded data, having

   a sequential part (17) with at least a first equaliser (4) and a first decoder (7) performing a sequential detection of the coded data,
   an iterative part (18) with at least a second equaliser (23) and a second decoder (27) performing a iterative detection, whereby
   the sequential part (17) is coupled to the iterative part (18) through an interface (A;B), which delivers information about data processed by the first equaliser (4) and the first decoder (7) for iterative detection by the second equaliser (23) and the second decoder (27).

2. Apparatus according to claim 1,
   **characterised in,**
   that the information delivered by the first part (17) contains a likelihood information for symbols used to build the coded data.

3. Apparatus according to claim 2,
   **characterised in,**
   that the likelihood information is a logarithmic likelihood ratio.

4. Apparatus according to one of the claims 1 to 3,
   **characterised in,**
   that the apparatus comprises a radio receiver (3) for receiving the coded data which represents coded data of a mobile communications system.

5. Apparatus according to claim 4,
   **characterised in,**
   that the mobile communications system is a GSM system.

Fig. 1

Fig. 2

Fig. 3

European Patent
Office

**EUROPEAN SEARCH REPORT**

Application Number

EP 98 30 3938

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 96 24999 A (FRANCE TELECOM; TELEDIFFUSION DE FRANCE) 15 August 1996<br>* figure 3 *<br>* page 1, line 7 - line 10 *<br>* page 5, line 16 - line 21 * | 1 | H04L1/00<br>H04L25/03 |
| A | PICART ET AL.: "Turbo-detection: a new approach to combat channel frequency selectivity"<br>1997 IEEE INTERNATIONAL CONFERENCE ON COMMUNICATIONS, 8 - 12 June 1997, pages 1498-1502 vol.3, XP002080194<br>New York, US<br>* abstract *<br>* page 1499, left-hand column, paragraph 2 - right-hand column, paragraph 3 * | 1 | |
| A | RAPHAELI, ZARAI: "Combined turbo equalization and turbo decoding"<br>IEEE GLOBAL TELECOMMUNICATIONS CONFERENCE 1997, 3 - 8 November 1997, pages 639-643, XP002080195<br>New York, US<br>* page 640, left-hand column, paragraph 2 - paragraph 4 * | 1 | TECHNICAL FIELDS SEARCHED (Int.Cl.6)<br><br>H04L |
| A | EP 0 755 122 A (SIEMENS) 22 January 1997<br>* figure 1 * | 1 | |

The present search report has been drawn up for all claims

| Place of search | Date of completion of the search | Examiner |
|---|---|---|
| THE HAGUE | 9 October 1998 | Scriven, P |

## ANNEX TO THE EUROPEAN SEARCH REPORT
## ON EUROPEAN PATENT APPLICATION NO.

EP 98 30 3938

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-1998

| Patent document cited in search report | | Publication date | Patent family member(s) | | Publication date |
|---|---|---|---|---|---|
| WO 9624999 | A | 15-08-1996 | FR | 2730370 A | 09-08-1996 |
| | | | EP | 0808538 A | 26-11-1997 |
| EP 0755122 | A | 22-01-1997 | DE | 19526416 A | 23-01-1997 |
| | | | US | 5761248 A | 02-06-1998 |

EPO FORM P0459

For more details about this annex : see Official Journal of the European Patent Office, No. 12/82